# DEMANDE DE BREVET EUROPEEN

(11) **EP 1 111 331 A1**
(43) Date de publication de la demande: **27.06.2001**
(21) Numéro de dépôt: 99811198.3
(22) Date de dépôt: 23.12.1999
(51) Int. Cl.: G01B 7/34, G01N 27/00, B81B 1/00

(54) **Palpeur pour la nanotechnologie et son procédé de fabrication**

(71) Demandeur: C.S.E.M. CENTRE SUISSE D'ELECTRONIQUE ET DE MICROTECHNIQUE SA, 2007 Neuchâtel (CH)
(72) Inventeur: Niedermann, Philipp, 2034 Peseux (CH); Staufer, Urs, 2000 Neuchâtel (CH)
(74) Mandataire: Gresset, Jean

(57) **Abrégé**

L'invention concerne un palpeur destiné à la nanotechnologie, comportant une membrane (15) en silicium monocristallin, une poutre (14) solidaire de la membrane par une extrémité et une pointe en diamant (16), en forme de pyramide à trois faces, disposée à l'autre extrémité de la poutre. La base de la pyramide forme un triangle isocèle ayant comme axe de symétrie l'axe de la poutre. Deux de ses faces sont identiques et disposées symétriquement par rapport à cet axe, la troisième face, qui a pour base celle du triangle isocèle, ayant ledit axe comme axe de symétrie.

## Description

La présente invention concerne un palpeur destiné à la nanotechnologie ainsi que son procédé de fabrication.

Un tel palpeur est généralement constitué d'une pointe en matériau dur disposée à l'extrémité d'une poutre ou levier (en anglais "cantilever"). Cette pointe, dont le rayon est typiquement de 10 à 20 nm et qui peut être déplacée sur des distances sub-micrométriques dans trois directions orthogonales, peut être utilisée notamment pour la nanoindentation, le "nanoscratching" et l'imagerie AFM (microscopie à force atomique).

Dans l'état actuel de la technique, les pointes de ce type, souvent appelées "pointes AFM", sont le plus souvent en silicium et plus rarement en diamant. Il existe aussi des pointes de silicium revêtues d'une couche de diamant de 100 nm d'épaisseur, réalisée par CVD (chemical vapor deposition).

On a proposé plus récemment (brevet EP 0766 060 A1 ) des pointes pyramidales à quatre faces en diamant fabriquées par moulage. Bien que ces pointes soient d'un très grand intérêt, leur réalisation est assez délicate. Il est difficile, en effet, de faire se rejoindre de manière reproductive les quatre faces de la pyramide avec une précision suffisante.

La présente invention a pour but de fournir un palpeur exempt de cet inconvénient.

De façon plus précise, le palpeur selon l'invention, qui comporte une membrane en silicium monocristallin, une poutre solidaire de la membrane par une extrémité et une pointe en diamant disposée à l'autre extrémité de la poutre, est caractérisé en ce que ladite pointe a la forme d'une pyramide à trois faces.

Le palpeur selon l'invention peut présenter encore les caractéristiques suivantes:
- la base de la pyramide forme un triangle isocèle ayant comme axe de symétrie l'axe de la poutre;
- deux des faces de la pyramide sont identiques et disposées symétriquement par rapport audit axe de symétrie, la troisième face, qui a pour base celle dudit triangle isocèle, ayant ledit axe comme axe de symétrie.

Selon un mode de réalisation avantageux, la poutre et la membrane sont en silicium et la pointe en diamant est fixée dans une découpe pratiquée dans ladite poutre. La poutre et la membrane sont alors réalisées en un seul bloc de silicium de coupe de type { 311 } ou, plus généralement, présentant une orientation à faible symétrie. Dans une variante avantageuse, la poutre peut être en silicium de coupe de type { 100 } ou, plus généralement, présentant une orientation à forte symétrie et la pointe en diamant, alors ancrée dans la poutre, est réalisée par moulage dans un substrat en silicium de type { 311 } ou présentant une orientation à faible symétrie,.

Selon un autre mode de réalisation avantageux, la poutre est elle-même en diamant et la pointe fait partie intégrante de ladite poutre.

Le palpeur est, de préférence, fixé à un cadre rectangulaire délimitant un espace à l'intérieur duquel s'étend la poutre et la membrane, celle-ci étant solidaire des montants du cadre. Enfin, un cadre de renforcement est avantageusement associé à la membrane et au cadre rectangulaire.

L'invention concerne également un procédé pour la fabrication du palpeur défini ci-dessus.

Selon un mode de mise en oeuvre avantageux, le procédé comporte les opérations suivantes:
- dépôt sur les faces supérieure et inférieure d'une plaque substrat en silicium monocristallin d'au moins une couche de barrière,
- gravage dans la couche supérieure d'une découpe en forme de triangle isocèle,
- attaque chimique de la plaque pour obtenir une empreinte pyramidale à trois faces,
- élimination de la couche de barrière supérieure,
- dépôt et gravage sur la face supérieure de la plaque d'une couche de diamant formant une bande recouvrant ladite empreinte, de même axe que l'axe de symétrie dudit triangle,
- gravage dans la couche de barrière inférieure d'une découpe centrale de même axe que l'axe de symétrie dudit triangle isocèle, et
- attaque chimique de la plaque pour éliminer sa partie qui correspond à ladite découpe centrale.

Selon un autre mode de mise en oeuvre avantageux, le procédé comporte les opérations suivantes:
- dépôt sur les faces supérieure et inférieure d'une plaque substrat en silicium monocristallin d'au moins une couche de barrière,
- gravage dans la couche supérieure d'une découpe en forme de triangle isocèle,
- attaque chimique de la plaque pour obtenir une empreinte pyramidale à trois faces dont la base a un contour correspondant à celui de ladite découpe,
- élimination de la couche de barrière supérieure,
- dépôt sur la face supérieure de la plaque d'une couche de diamant recouvrant ladite empreinte,
- attaque chimique de la plaque par sa face inférieure pour y former une cuvette,
- dépôt d'une couche de barrière sur la face supérieure de la plaque,
- gravage dans ladite couche de barrière d'une découpe centrale en forme de U, de même axe que l'axe de symétrie dudit triangle isocèle et dont la base entoure ladite couche de diamant, et
- attaque chimique de la plaque, par sa face supérieure, pour éliminer sa partie qui correspond à ladite découpe.

D'autres avantages et caractéristiques de l'invention ressortiront de la description qui va suivre, faite en regard du dessin annexé, dans lequel:
- la figure 1 représente un palpeur selon l'invention;
- la figure 2 montre la pointe équipant le palpeur de la figure 1;
- les figures 3 à 5 montrent les différentes étapes de fabrication d'un tel palpeur; et
- la figure 6 illustre les étapes pour monter le palpeur sur un support.

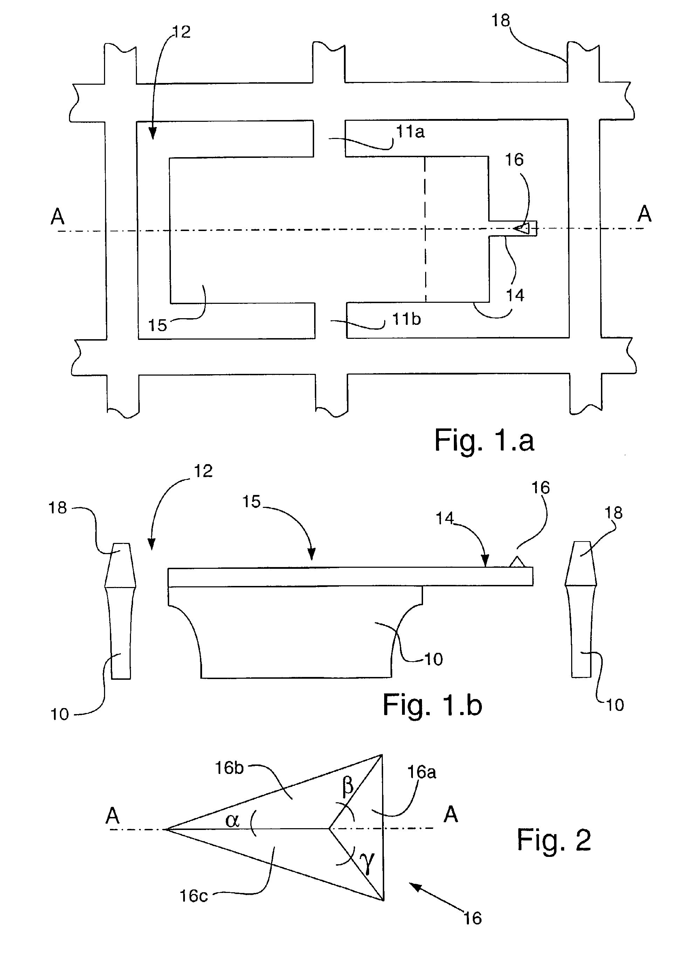

Le palpeur de la figure 1 est représenté en phase finale de fabrication encore fixé à son cadre. Comme il apparaît à la vue de dessus 1.a et à la vue en coupe 1.b (selon A - A), le cadre est constitué d'une partie en silicium monocristallin 18 et d'une partie en verre 10. A ce cadre, qui délimite un espace 12, est attaché, par deux bras 11.a et 11.b, le palpeur proprement dit qui comporte une poutre 14, à l'extrémité effilée de laquelle figure une pointe 16, et une membrane 15. Comme représenté à la figure 1.b, la membrane 15 est renforcée par un support en verre 10. La poutre 14 et la membrane 15 sont, comme le cadre 18, en silicium monocristallin alors que la pointe 16 est en diamant. Le verre de renforcement peut être un verre au silicate de bore, tel que celui connu sous la marque Pyrex ®. Bien que ne soit représenté qu'un seul élément palpeur à la figure 1, on comprendra aisément qu'une pluralité de tels éléments peuvent être simultanément réalisés sur une même plaquette de silicium. Le palpeur peut aisément être séparé de son cadre en brisant les attaches 11.a et 11.b à l'aide de brucelles, par exemple, ou de tout autre moyen approprié.

La pointe 16 est une pyramide à base triangulaire, c'est-à-dire qu'elle a une forme tétraédrique. Une telle forme présente un avantage évident par rapport aux pyramides à base carrée de l'art antérieur, du fait que, géométriquement, l'intersection de trois plans définit obligatoirement un point, alors qu'il est beaucoup plus difficile d'obtenir que quatre plans se coupent en un point. La pratique a montré qu'en réalisant une pointe de forme pyramidale à base triangulaire, son rayon de courbure au sommet est inférieur à 20 nm, valeur qu'il est extrêmement difficile d'atteindre avec une pointe de forme pyramidale à base carrée.

Typiquement, un tel palpeur peut être réalisé avec les dimensions suivantes:
- poutre: longueur 300 - 500 µm; largeur 50 - 100 µm; épaisseur 2 - 20 µm;
- pointe: hauteur 10 - 15 µm;
- palpeur (hors cadre): 2 x 4 x 0,5 mm³.

Comme le montre la figure 2, la pointe en diamant 16, représentée vue de dessous à échelle très agrandie, possède une base en forme de triangle généralement isocèle (voir ci-après pour une explication plus détaillée) ayant l'axe AA comme axe de symétrie et dont la pointe est dirigée vers l'extrémité non libre de la poutre 14. Elle comporte trois faces triangulaires 16a, 16b et 16c. La face triangulaire 16a, qui a pour base celle du triangle généralement isocèle, est elle-même isocèle. Les deux autres faces triangulaires, 16b et 16c, symétriques par rapport à l'axe AA, sont généralement identiques.

Ainsi qu'il apparaîtra plus loin, la pointe 16 est formée d'une couche de diamant déposée dans une empreinte formée par attaque chimique d'un substrat en silicium. L'orientation relative des trois faces de la pyramide est donc caractéristique de l'orientation de ce matériau. Dans l'exemple décrit ci-après, qui fait appel à une plaque de silicium ayant une coupe de type {311}, l'angle α entre les faces 16b et 16c est égal à 109,5°, l'angle β entre la face 16a et la face 16b est égal à 70,5° et l'angle y entre la face 16a et la face 16c est aussi égal à 70,5°.

Le plan de coupe du substrat ou plaque de base peut être modifié dans une large mesure. Il suffit qu'il soit disposé de manière que trois plans de type {111} forment un tétraèdre avec lui. Ainsi peut-on s'écarter de l'orientation {311} indiquée ci-dessus, ce qui aura pour effet de déformer la pointe tétraédrique par rapport à sa forme symétrique telle que décrite précédemment. Dans tous les cas, toutefois, lorsqu'on utilise du silicium, les angles entre les faces restent les mêmes. Seul change le rapport entre la hauteur de la pointe et la surface de la base. En dehors du silicium, qui reste le matériau privilégié, il est possible d'envisager l'utilisation d'autres matériaux, tels que le quartz ou, encore, l'arséniure de gallium (GaAs).

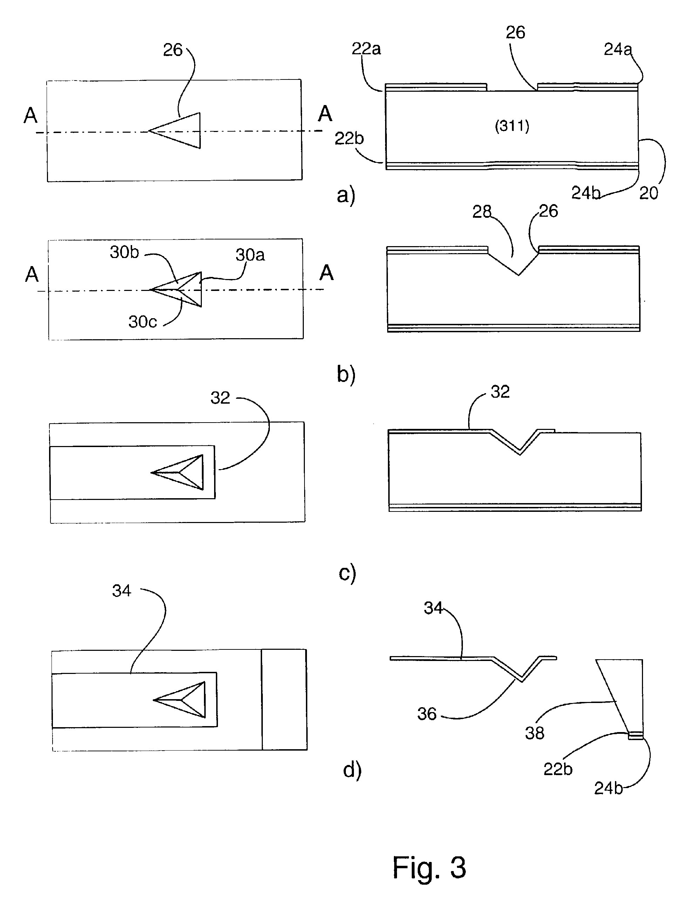

Selon un premier mode de mise en oeuvre de l'invention, on réalise un palpeur dans lequel la poutre 14 et la pointe 16 sont toutes les deux en diamant. Les quatre étapes principales du procédé sont représentées sur la figure 3, où ne sont montrés que l'extrémité effilée du palpeur et la partie du cadre qui lui fait face, et identifiées par les lettres a, b, c et d. Sur cette figure, la partie de gauche montre une partie du palpeur vue de dessus, alors que la partie de droite la montre en coupe.

La figure 3a montre un substrat 20, d'axe longitudinal AA, en silicium monocristallin, formé à partir d'un lingot scié selon un plan de type {311}. Ce substrat porte, sur chacune de ses faces et superposées, une couche barrière de dioxyde de silicium (SiO₂) 22 et une couche barrière de nitrure de silicium (Si₃N₄) 24, les couches disposées sur la face supérieure du substrat 20 étant identifiées par la lettre a et celles se trouvant sur la face inférieure par la lettre b. L'épaisseur de ces couches est typiquement de quelques centaines de nanomètres (nm).

Les couches supérieures 22a et 24a sont, tout d'abord, gravées selon une découpe 26, en forme de triangle isocèle d'axe de symétrie AA, correspondant à la base de la pointe 16 à réaliser, par les techniques habituelles de photolithographie et gravure.

La deuxième étape du procédé, illustrée par la figure 3b, consiste à attaquer le substrat au moyen d'une solution de potasse (KOH) de manière à obtenir une empreinte tétraédrique 28 qui comporte une base triangulaire de même forme que la découpe 26 et trois faces 30a, 30b et 30c. Les faces 30b et 30c sont disposées symétriquement par rapport à la ligne AA qui passe par leur arête commune et coupe la face 30a en son milieu. Cette empreinte est définie par l'intersection de trois plans de type {111}.

Les couches supérieures 22a et 24a sont ensuite éliminées, de sorte que le silicium devient apparent sur toute la surface supérieure du substrat 20. Cette élimination peut se faire, de manière classique, soit par attaque plasma, soit par attaque chimique à l'aide d'une solution HF.

L'étape suivante, représentée à la figure 3c, consiste à réaliser sur la face supérieure du substrat 20 une couche de diamant 32 destinée à constituer la poutre du palpeur munie de sa pointe. Pour cela, une couche de diamant est déposée sur tout le substrat ainsi que dans l'empreinte 28; puis, cette couche de diamant est structurée, par photolithographie et gravure du type RIE (Reactive Ion Etching) dans un plasma à oxygène, pour correspondre à la forme de la poutre. La couche de diamant 32 est obtenue par croissance du diamant, par exemple selon le procédé décrit dans le document EP 0766 060, à partir d'une couche de nucléation, formée de microparticules de diamant.

Enfin, comme illustré par la figure 3d, une poutre 34 munie de sa pointe 36, toutes deux en diamant, est obtenue au travers des opérations suivantes:
- protection de la face supérieure du substrat 20 au moyen d'une couche barrière en dioxyde de silicium (SiO₂);
- formation par photolithographie et gravure, dans les couches inférieures 22b et 24b, d'une découpe rectangulaire, d'axe longitudinal AA;
- attaque du silicium au KOH pour ne conserver qu'un cadre rectangulaire 38 et la poutre 34 dotée de sa pointe 36;
- élimination de la couche de protection recouvrant la face supérieure du substrat 20.

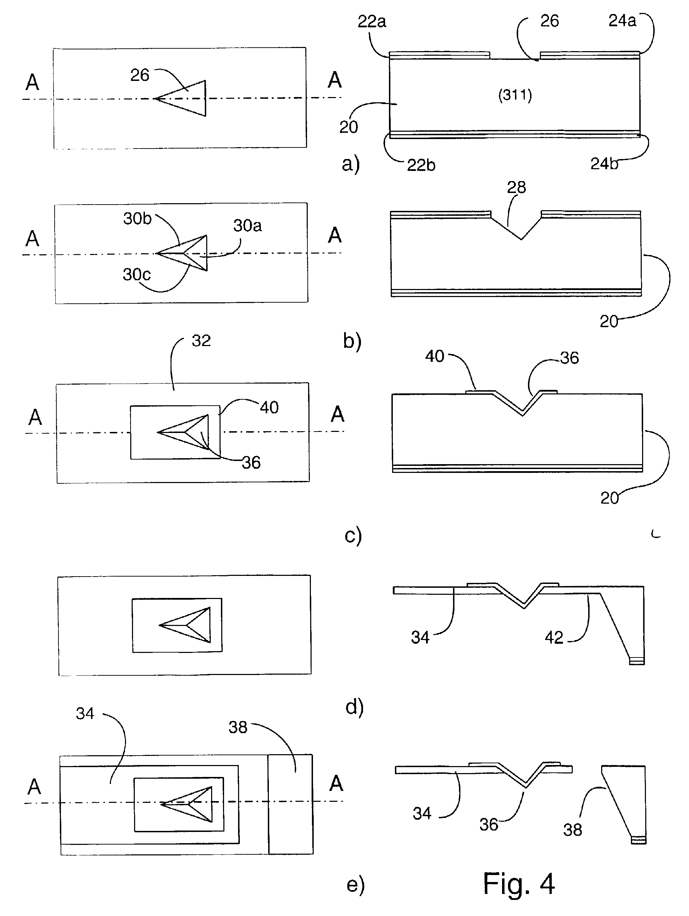

Le procédé décrit en référence à la figure 4, sur laquelle les éléments communs au mode de réalisation de la figure 3 sont désignés par les mêmes numéros de référence, permet de fabriquer un palpeur dont la poutre 34 est en silicium, la pointe en diamant 36 étant fixée dans son extrémité.

Les première et deuxième étapes, représentées en a et b, sont identiques à celles du procédé de la figure 3. On y retrouve le substrat 20 en silicium de coupe { 311 }, les couches 22 et 24, la découpe 26 et l'empreinte 28.

Dans l'étape suivante, représentée sur la figure 4c, la couche de diamant 32 est réalisée selon le procédé indiqué précédemment. Sa surface est toutefois considérablement réduite, se limitant à un rectangle qui entoure l'empreinte 28 et forme, ainsi, une assise 40, dont la surface est sensiblement égale à deux fois celle de l'empreinte 26 et qui est destinée à assurer une fixation solide de la pointe en diamant.

Lors de l'étape représentée à la figure 4d, les mêmes opérations que celles décrites en référence à la figure 3d sont effectuées, l'attaque du silicium étant, toutefois, incomplète, de manière à obtenir une cuvette dont le fond est constitué par une membrane 42.

Comme illustré à la figure 4e, la face supérieure du substrat 20 et la face inférieure de la membrane 42 ainsi que les parois internes du cadre 38 sont ensuite protégées par une couche barrière insensible au KOH. Sur la face supérieure, cette couche est gravée localement, sur toute son épaisseur, par photolithographie, pour définir la forme de la poutre, d'axe AA, qui entoure l'assise 40. La membrane 42 est alors attaquée au KOH, de manière à dégager la poutre 34. La structure ainsi obtenue est donc identique à celle illustrée sur la figure 3d mais avec une pointe en diamant 36 fixée dans l'extrémité libre de la poutre en silicium 34 .

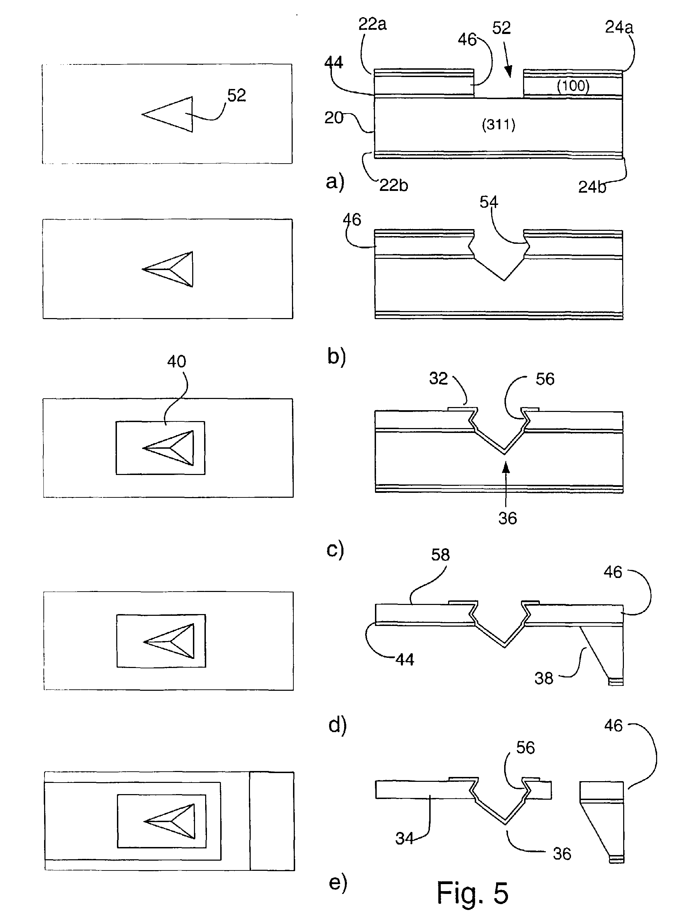

Avec le procédé décrit en référence à la figure 5, sur laquelle les éléments communs aux modes de réalisation précédents sont désignés par les mêmes numéros de référence, le palpeur obtenu comporte une pointe en diamant 36 ancrée dans l'extrémité de poutre en silicium 34. Un tel procédé permet de garantir une épaisseur précise et uniforme de la poutre du palpeur.

Selon ce procédé, il est nécessaire d'utiliser un assemblage de type SOI (de l'anglais Silicon On lnsulator). Un tel assemblage est, en fait, constitué de deux plaques en silicium 20 et 46 assemblées l'une à l'autre par l'intermédiaire d'une couche isolante (SiO₂). Dans l'exemple représenté, la plaque inférieure 20 a une orientation de type {311} alors que la plaque supérieure 46 a une orientation de type {100}. Cette plaque supérieure a été amincie iusau'à une épaisseur devant correspondre à celle de la poutre du palpeur. Les faces supérieure et inférieure de l'assemblage SOI sont revêtues d'une première (22a, 22b) couche isolante d'oxyde SiO₂ puis d'une deuxième (24a, 24b) couche isolante de nitrure Si₃N₄. Lors de la première étape, illustrée par la figure 5a, une découpe triangulaire 52, de même forme que la découpe 26, est réalisée par photolithographie, de la même manière que celle décrite en référence à la figure 3, dans tout l'empilement disposé sur la plaque 20, soit au travers des couches 24a, 22a, 46 et 44 . Au fond de cette découpe, la plaque 20 en silicium de type {311} est à nu.

Lors de l'opération suivante, représentée à la figure 5b, le silicium de la plaque 20 est attaqué au moyen de KOH de manière similaire à ce qui a été décrit plus haut. Dans ce cas, toutefois, le KOH agit également sur la couche 46 de silicium de type { 100 }, provoquant une attaque latérale qui forme une gorge 54.

L'étape représentée à la figure 5c est tout à fait comparable à celle décrite en référence à la figure 4c, avec la création d'une couche de diamant 32 qui forme la pointe 36 et l'assise 40. On relèvera, toutefois, que cette couche pénètre dans la gorge 54 pour former un anneau d'ancrage 56, ce qui renforce considérablement la liaison entre la poutre 34 et la pointe 36.

Lors de l'étape illustrée par la figure 5d, semblable à l'étape de la figure 4d, le silicium de la plaque 20 est enlevé dans la partie centrale, sur toute son épaisseur, pour définir le cadre 38; la couche d'oxyde 44 constituant une couche d'arrêt d'attaque. Il subsiste alors une membrane 58 formée des couches 44 et 46.

Dans l'étape correspondant à la figure 5e, on retrouve toutes les opérations décrites en référence à la figure 4e mais avec, en plus, l'élimination de la couche 44 de SiO₂. Après cette opération, le silicium de la couche 46 est gravé pour former la poutre 34. Dans ce cas, la précision de l'épaisseur de la poutre en silicium est meilleure que dans le cas du procédé décrit en référence à la figure 4, car il est plus facile de maîtriser cette cote.

Dans les trois exemples de réalisation ci-dessus, les découpes 26 et 52 sont obtenues à partir de masques de forme triangulaire. Une telle géométrie permet d'avoir une surface maximale de silicium en contact avec le KOH. D'autres formes sont également envisageables sans pour autant que la forme de l'empreinte soit modifiée, celle-ci étant définie par les seuls plans de type {111} de la structure du silicium.

Seule a été décrite, jusqu'ici, la manière de former un ensemble comportant une poutre, une pointe et un cadre. Comme plusieurs de ces ensembles sont fabriqués simultanément sur une même plaque, il est ensuite nécessaire de les séparer les uns des autres. A cet effet, au cours du processus de fabrication, des gorges peuvent être creusées entre les cadres, ces derniers étant reliés entre eux au moyen de ponts. La séparation se fait alors simplement en brisant les ponts.

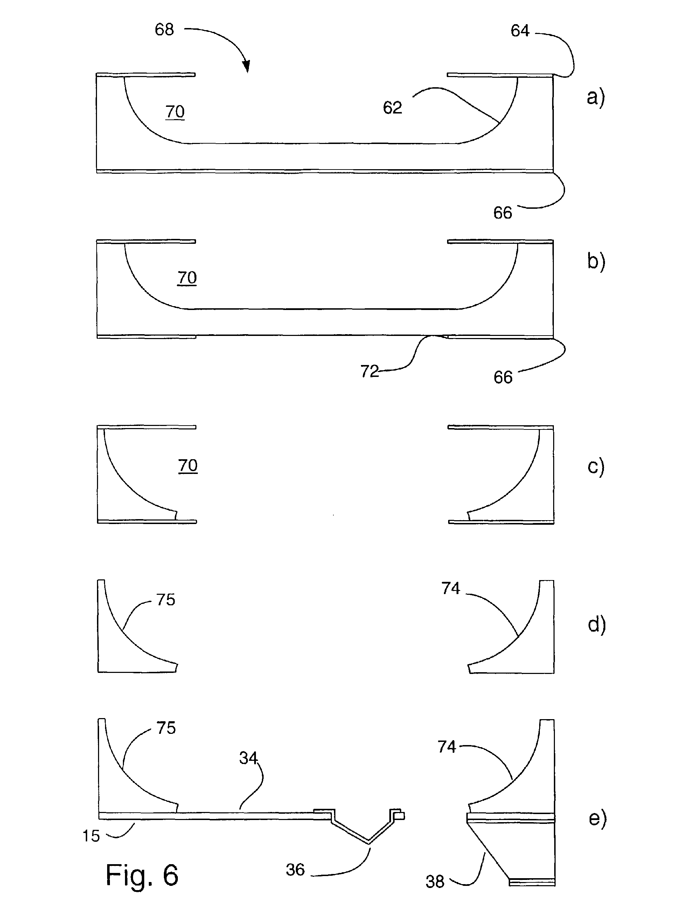

Pour pouvoir utiliser la poutre munie de sa pointe dans des conditions optimales, il est souhaitable qu'elle soit fixée à une base rigide. Or, le cadre 38 est extrêmement léger. Pour pallier cet inconvénient, le cadre en silicium ainsi que les membranes des palpeurs sont fixés sur un support en Pyrex, selon le procédé représenté schématiquement à la figure 6.

Comme montré sur la figure 6a, le support est formé dans une plaque 62 en Pyrex, d'environ 500 µm d'épaisseur, dont les faces supérieure et inférieure portent respectivement des couches 64 et 66 de silicium polycristallin. La couche supérieure 64 est traitée par photolithographie et attaquée chimiquement, de manière à ouvrir une découpe centrale 68. La plaque de Pyrex 62 est ensuite attaquée au moyen d'acide fluorhydrique (HF) de manière à obtenir une cuvette 70 dont les bords sont arrondis et dont la profondeur est environ égale à la moitié de l'épaisseur de la plaque 62. L'arrondi des bords provient du fait que l'attaque du Pyrex est isotrope. La plaque est représentée dans cet état à la figure 6a.

La figure 6b montre qu'ensuite, une découpe 72, de même dimension que la découpe 68, est formée, par photolithographie, dans la couche inférieure 66.

La plaque est ensuite, à nouveau, attaquée au moyen de HF. Comme le représente la figure 6c, le verre Pyrex est, cette fois, éliminé par les deux faces, de sorte que la profondeur de la cuvette 70 augmente. Une cuvette se creuse également à partir de l'autre face, jusqu'à ce que la paroi qui sépare les deux cuvettes soit percée.

Finalement, comme le montre la figure 6d, les résidus des couches 64 et 66 sont éliminés au moyen de KOH.

La plaque ainsi obtenue comporte des cadres 74, destinés à correspondre à ceux des éléments palpeurs de l'un des procédés précédents, et des renforts 75 destinés à renforcer les membranes de ces mêmes éléments palpeurs. La plaque en Pyrex est alors fixée, par soudage anodique (Anodic Bonding), au substrat en silicium dans lequel ont été réalisés les éléments palpeurs.

La figure 6e représente finalement un dispositif formé d'un ensemble obtenu selon le procédé décrit en référence à la figure 5, avec une membrane 15, une poutre 34, une pointe 36 et un cadre 38; le cadre 38 ainsi que la membrane 15 étant renforcés par une épaisseur de Pyrex (74,75).La description de la présente invention a été faite en se référant à des coupes de silicium monocristallin de types { 311 } et { 100 }. Toutefois, de manière plus générale, des substrats présentant des orientations à faible symétrie et des orientations à forte symétrie peuvent aussi être utilisés.

## Revendications

1. Palpeur destiné à la nanotechnologie, comportant une membrane (15, 42) en silicium monocristallin, une poutre (14, 34) solidaire de ladite membrane par une extrémité et une pointe en diamant (16, 36) disposée à l'autre extrémité de ladite poutre, caractérisé en ce que ladite pointe a la forme d'une pyramide à trois faces.

2. Palpeur selon la revendication 1, caractérisé en ce que la base de la pyramide forme un triangle isocèle ayant comme axe de symétrie l'axe de la poutre.

3. Palpeur selon la revendication 2, caractérisé en ce que deux des faces de la pyramide sont identiques et disposées symétriquement par rapport audit axe de symétrie, la troisième face, qui a pour base celle dudit triangle isocèle, ayant ledit axe comme axe de symétrie.

4. Palpeur selon l'une des revendications 1 à 3, caractérisé en ce que la poutre est elle-même en diamant et en ce que la pointe fait partie intégrante de ladite poutre.

5. Palpeur selon l'une des revendications 1 à 3, caractérisé en ce que la poutre est en silicium et en ce que la pointe en diamant est fixée dans une découpe pratiquée dans ladite poutre.

6. Palpeur selon la revendication 5, caractérisé en ce que la poutre et la membrane sont réalisées en un seul bloc de silicium monocristallin.

7. Palpeur selon la revendication 6, caractérisé en ce que le silicium a une coupe à faible symétrie.

8. Palpeur selon la revendication 7, caractérisé en ce que ladite coupe est de type {311}.

9. Palpeur selon l'une des revendications 1 à 8, caractérisé en ce qu'il est fixé à un cadre rectangulaire délimitant un espace (12) à l'intérieur duquel s'étendent la poutre et la membrane, celle-ci étant solidaire des montants du cadre.

10. Palpeur selon la revendication 9, caractérisé en qu'il comporte, en outre, un cadre de renforcement associé audit cadre rectangulaire et à ladite membrane.

11. Procédé de fabrication d'un palpeur selon la revendication 1, caractérisé en ce qu'il comporte les opérations suivantes:
- dépôt sur les faces supérieure et inférieure d'une plaque substrat en silicium monocristallin d'au moins une couche de barrière,
- gravage dans la couche de barrière supérieure d'une découpe en forme de triangle isocèle,
- attaque chimique de la plaque pour obtenir une empreinte pyramidale à trois faces dont la base a un contour correspondant à celui de ladite découpe,
- élimination de la couche de barrière supérieure,
- dépôt et gravage sur la face supérieure de la plaque d'une couche de diamant formant une bande recouvrant ladite empreinte, de même axe que l'axe de symétrie dudit triangle isocèle,
- gravage dans la couche inférieure de barrière d'une découpe centrale de même axe que l'axe de symétrie dudit triangle isocèle, et
- attaque chimique de la plaque pour éliminer sa partie qui correspond à ladite découpe centrale.

12. Procédé de fabrication d'un palpeur selon la revendication 1, caractérisé en ce qu'il comporte les opérations suivantes:
- dépôt sur les faces supérieure et inférieure d'une plaque substrat en silicium monocristallin d'au moins une couche de barrière,
- gravage dans la couche de barrière supérieure d'une découpe en forme de triangle isocèle,
- attaque chimique de la plaque pour obtenir une empreinte pyramidale à trois faces dont la base a un contour correspondant à celui de ladite découpe,
- élimination de la couche de barrière supérieure,
- dépôt sur la face supérieure de la plaque d'une couche de diamant recouvrant ladite empreinte,
- attaque chimique de la plaque par sa face inférieure pour y former une cuvette,
- dépôt d'une couche de barrière sur la face supérieure de la plaque,
- gravage dans ladite couche de barrière d'une découpe centrale en forme de U, de même axe que l'axe de symétrie dudit triangle isocèle et dont la base entoure ladite couche de diamant, et
- attaque chimique de la plaque pour éliminer sa partie qui correspond à ladite découpe.
